# EUROPEAN PATENT APPLICATION

(11) **EP 2 065 578 A1**
(43) Date of publication of application: **03.06.2009**
(21) Application number: 08020404.3
(22) Date of filing: 24.11.2008
(51) Int. Cl.: F01N 5/02, F01N 3/20

(54) **Heating system for chemical used in exhaust purification system**

(30) Priority: 28.11.2007 US 990753 P; 18.11.2008 US 273204
(71) Applicant: International Engine Intellectual Property, Warrenville, IL 60555 (US)
(72) Inventor: Aaron W. Meek, 60545 Plano, Illinois (US); Adam C. Lack, 60480 Willow Springs, Illinois (US); Andrei Makartchouk, 60148 Lombard, Illinois (US); Gregory A. Griffin, 60139 Glendale Heights, Illinois (US); Iqbal Anwar, 60108 Bloomingdale, Illinois (US)
(74) Representative: Kuhnen & Wacker

(57) **Abstract**

A system (10) for injecting urea solution into an exhaust system of a diesel engine (12) that powers a truck, includes a supply tank (30) that holds urea solution and a urea solution delivery system that moves urea solution from the supply tank (30) to the exhaust and injects the urea solution into the exhaust system upstream of or into a catalytic converter (22). A urea heat exchanger (70) and an exhaust heat exchanger (74) are each configured to receive coolant. The urea heat exchanger (70) is configured to receive heated coolant exiting the exhaust heat exchanger (74) and is arranged to transfer heat from the heated coolant into the urea solution within the supply tank (30). The exhaust heat exchanger (74) is configured to receive coolant from the diesel engine (12) and to transfer heat from the exhaust gas into the coolant.

## Description

This application claims the benefit of U.S. provisional application serial number 60/990,753, filed November 28, 2007.

### Technical Field of the Invention

The invention relates to an exhaust-gas purification device in the exhaust of a combustion system, in particular in the exhaust of an internal-combustion engine of a motor vehicle. The invention also relates to a heating system for a reservoir for liquid to be introduced into the exhaust through a supply line, for exhaust-gas purification.

### Background Of The Invention

According to known exhaust-gas purification devices, a liquid is drawn from a reservoir through a supply line and introduced into the exhaust gas during the combustion, for chemical purification of the exhaust gas. Such a method is disclosed in U.S. 5,884,475.

Heating systems and other combustion systems are known that provide for the purification of exhaust gas in such a way that a liquid (such as, for example, urea solution) is introduced into the exhaust gas for treating the exhaust gas. However, providing the liquid in a usable state may be a problem if, after a prolonged operating stoppage, the ambient temperature has dropped so far that the liquid has an unduly high viscosity or is frozen.

One known method of reducing the pollutants, such as nitrogen oxides, contained in exhaust gas of an internal-combustion engine, is known as regulated or controlled diesel catalytic converter (CDC). That procedure is used primarily in internal-combustion engines which are operated with an excess of air, such as, for example, diesel engines and lean-running engines. The procedure is based essentially on the method of selective catalytic reduction (SCR) described in U.S. Patent 5,884,475 and U.S. Patent 7,017,336. In the case of the SCR method, the nitrogen oxides, together with ammonia, are brought into contact with a selective catalyst and catalytically converted into nitrogen and water.

In the case of treating motor vehicle exhaust, for providing a supply of ammonia, an aqueous urea solution is usually carried on the motor vehicle as a reducing agent for the catalytic conversion of the nitrogen oxides. Ammonia is produced from the aqueous urea solution by hydrolysis in the quantity required to convert the nitrogen oxides.

Urea aqueous solutions can freeze at certain temperatures as a function of concentration. U.S. Patent 5,884,475 describes a method for heating of urea to be introduced into an exhaust-gas purification system that includes insulating the urea supply tank and providing a heating coil within the tank. The heating coil can receive coolant from the engine.

The present inventors have recognized that it would be advantageous to provide a system of heating and thawing urea liquid that rapidly heats the supply of urea solution.

### Summary Of The Invention

The present invention provides a urea solution heating system for an exhaust gas treating device that utilizes the high temperature of the exhaust gas to heat the urea solution.

For example, an exemplary embodiment of the invention provides a urea heating and/or thawing system used for a system for injecting urea solution into an exhaust system of a diesel engine that powers a truck. The system for injecting urea solution includes a supply tank that holds urea solution and a urea solution delivery system that moves urea solution from the supply tank to the exhaust and injects the urea solution into the exhaust system upstream of a selective catalytic converter. A urea heat exchanger and an exhaust heat exchanger are each configured to receive coolant. The urea heat exchanger is configured to receive heated coolant exiting the exhaust heat exchanger and is arranged to transfer heat from the heated coolant into the urea solution within the supply tank. The exhaust heat exchanger is configured to receive coolant and to transfer heat from the exhaust gas into the coolant.

In SCR systems that use liquid urea solutions such as ADBLUE, the solution will freeze at a temperature of 12°F and thus during winter operation, the frozen urea solution may need to be thawed before it can be injected into the exhaust system. The urea solution should be thawed as quickly as possible to enable the system to function soon after startup to reduce emissions. The present invention provides an onboard urea supply tank for a truck that is controllably heated by exhaust gases from the truck engine. Particularly, the present invention provides a coolant circuit that is heated by the exhaust heat exchanger that transfers heat from the exhaust gas stream and then transfers the heat via the urea heat exchanger to the urea solution held within the supply tank.

The exhaust heat exchanger can be within or outside the exhaust gas conduit. The urea heat exchanger can be within or outside the urea tank. Preferably the urea heat exchanger is located within the urea tank.

Some existing urea tank heating systems use warm coolant flow to the urea tank to warm the urea in the tank. The exemplary embodiment of the invention can be adapted to re-use the same coolant lines to the urea tank on existing equipment.

According to a preferred embodiment of the invention, the exhaust heat exchanger is fitted to the exhaust system of a turbocharged diesel engine for the purpose of increasing engine coolant temperature before the engine coolant is pumped to the frozen or cold urea solution located within in a composite urea supply tank.

The exemplary embodiment of the invention includes:
a) a diesel engine in a vehicle,
b) An SCR catalyst to reduce NOₓ emission in the diesel exhaust stream,
c) a urea injector to supply urea/NH₃ to the SCR catalyst to convert NOₓ emissions within the SCR catalyst,
d) a urea supply tank and lines to provide liquid urea to the injector,
e) the first heat exchanger in the engine exhaust,
f) engine coolant flow to the first heat exchanger in the exhaust,
g) warmed engine coolant flow from the first heat exchanger in the exhaust to the urea tank, and
h) the second heat exchanger in the urea tank for heat transfer from the engine coolant to the urea in the urea tank.

An exemplary method of heating a chemical within a chemical supply tank, the chemical dispensed from the chemical supply tank to be injected into an exhaust system to treat exhaust gas, comprises the steps of:
transferring heat from exhaust gas to a fluid; and
transferring heat from the fluid to the chemical within the chemical supply tank.

The steps can be further defined in that the fluid is a heat transfer fluid that is isolated from the chemical.

The steps can be further defined in that the chemical is composed of urea solution.

The steps can be further defined in that the exhaust system and the chemical supply tank are on board a truck, wherein the exhaust system is part of the drive system for the truck.

The steps can be further defined in that during operation of the diesel engine, a coolant fluid is circulated through the diesel engine and urea solution is injected into the exhaust system, and if the temperature of the urea solution in the supply tank is below about 12 degrees F, the urea solution before injecting the urea solution into the exhaust system.

The use of exhaust gas heat according to the invention can allow for greater heat transfer into the frozen urea that the previously used system of engine heating alone. The invention can be implemented for many apparatus that use the SCR system. The exemplary apparatus and methods can increase cold-weather SCR system performance through increased heat transfer into frozen urea solution.

Numerous other advantages and features of the present invention will be become readily apparent from the following detailed description of the invention and the embodiments thereof, from the claims and from the accompanying drawings.

### Brief Description of The Drawings

Figure 1 is a schematic diagram of a typical urea injection system, incorporating a urea heating system of the present invention;

Figure 2 is a schematic diagram of a urea tank heating system of the invention; and

Figure 3 is a schematic diagram similar to Figure 2 but showing a somewhat different valve arrangement.

### Detailed Description of the preferred embodiments

While this invention is susceptible of embodiment in many different forms, there are shown in the drawings, and will be described herein in detail, specific embodiments thereof with the understanding that the present disclosure is to be considered as an exemplification of the principles of the invention and is not intended to limit the invention to the specific embodiments illustrated.

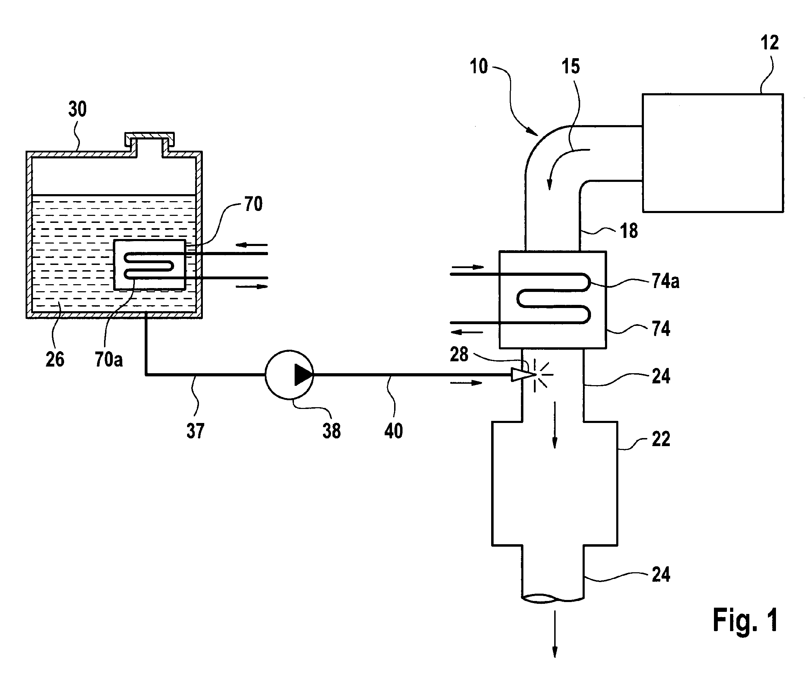

FIG. 1 illustrates in schematic form a urea injection system 10 that incorporates an exemplary embodiment urea heating system of the invention. The system 10 can be incorporated into the power plant of a diesel engine-powered truck. The urea injection system 10 can be as described in U.S. Patent Nos. 5,884,475 or 7,017,336, both herein incorporated by reference.

A diesel engine 12, such as a turbocharged diesel engine, produces exhaust gas 15 that is expelled through an exhaust conduit 18 and through an exhaust-gas purification device such as a catalytic converter 22. Exhaust gas passes through the converter 22, passes through an exhaust conduit 24, and then passes through remaining components of the exhaust system, and then is discharged to atmosphere. The converter 22 is chemically configured to reduce nitrogen oxide in the exhaust gas by chemical reduction using a urea solution 26 sprayed through a nozzle, or spray head 28 into the exhaust conduit 18 or into the converter 22.

A supply of urea solution 26 is contained in a refillable supply tank 30. The urea solution 26 is fed through a suction conduit 37 which feeds a urea pump 38, which pumps the solution through a supply line 40 to the nozzle 28.

An exemplary embodiment of the present invention includes a first heat exchanger 70 arranged to transfer heat into the urea solution 26 within the tank 30, and a second heat exchanger 74 arranged to transfer heat out of the exhaust 15 flowing through the exhaust conduit 18. The exchangers 70, 74 receive engine coolant through coils 70a, 74a respectively.

The first heat exchanger coils 70a can be located inside or outside the tank 30. The second heat exchanger coils 74a can be located within the exhaust conduit or outside the exhaust conduit 18, such as surrounding the exhaust conduit 18. The exchanger 74 can be located upstream of the converter 22.

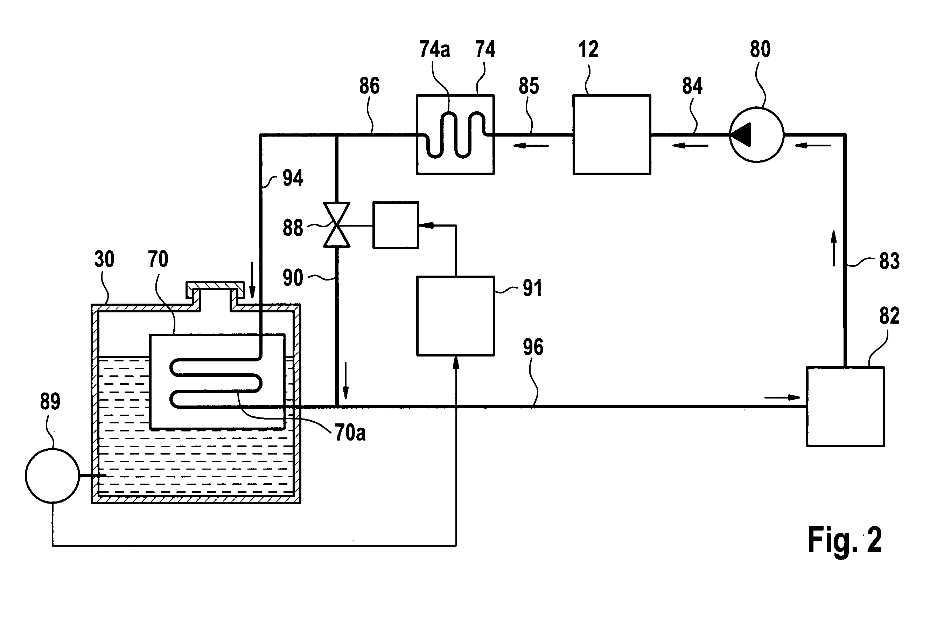

Figure 2 illustrates a coolant flow diagram of the present invention. A coolant pump 80, typically rotationally driven by the engine 12, pumps coolant from a radiator 82, through a coolant conduit 83, though a coolant conduit 84 to the diesel engine to cool the engine block and heads. A side stream of coolant passes from the engine 12, through a coolant conduit 85 to the second heat exchanger 74 where the hot exhaust from the engine 12 further heats the coolant within the coil 74a.

The coolant exits the exchanger coil 74a and passes though a coolant conduit 86 to a control valve 88. The control valve can be electrically operated mechanical valve, such as a solenoid operated valve. The control valve 88 is configured to controllably bypass an amount of hot coolant around the exchanger 70 though a bypass conduit 90, based on the temperature of the urea solution 26 within the tank 30, to control the temperature of the urea solution and/or to avoid overheating the urea solution. In a urea thawing operation, the coolant flows from the control valve 88 through a coolant conduit 94 and into the coil 70a. The coolant is cooled by the thawing urea solution 26 and flows from the coil 70a through a coolant conduit 96 back to the radiator 82 for further cooling and circulation.

A temperature sensor 89, such as a thermocouple, senses the temperature of the urea solution and sends a corresponding signal to a controller 91. This controller could be a dedicated controller or could be the vehicle engine control unit. The controller 91 sends a control signal, such as an electrical signal, to the valve 88 to open the bypass when the temperature of the urea solution is raised to an excessive level. It is also possible that, rather than an electronically controlled valve 88, the control valve 88 is mechanically temperature responsive to the urea solution temperature to open or close the bypass conduit 90, such as an engine thermostat valve. This alternative is also encompassed by the invention.

It is also possible that the valve 88 is located in the conduit 94 instead of the conduit 90 and the conduit 90 is restricted by diameter or other restriction such that the bypass conduit 90 is open all the time and the flow into the exchanger is controlled by the valve 88. It is also possible that there is a control valve in each of the conduits 90, 94 and the control valves are both controlled to ensure the effective amount, and not an excessive amount, of coolant flows through the exchanger 70. Both of these alternates are encompassed by the invention.

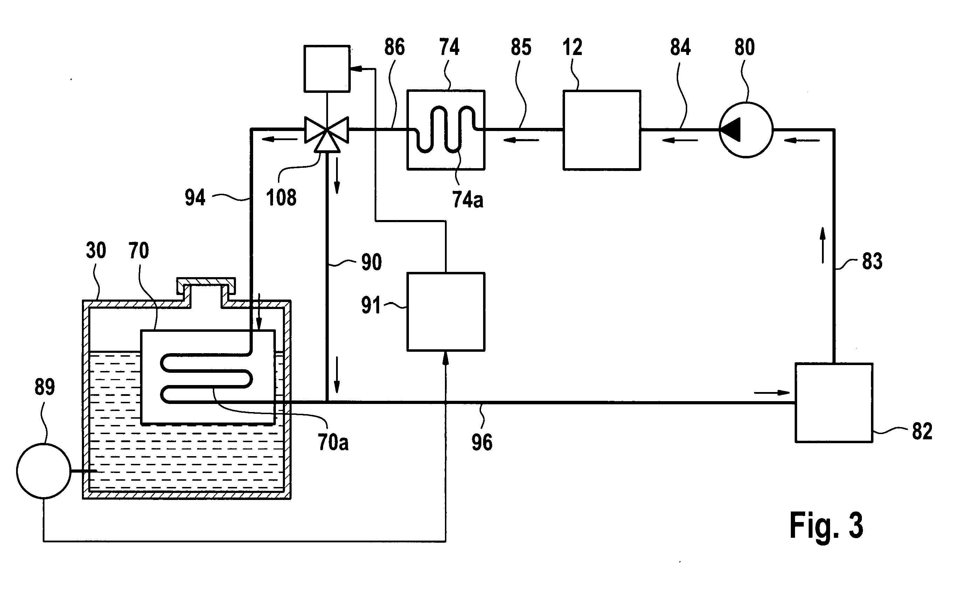

As shown in Figure 3, the control valve 88 of Figure 2 can be replaced with a three way control valve 108 that simultaneously closes the coolant path to the exchanger 70 while opening the coolant path through the bypass conduit 90. Conversely, the valve 108 can be operated to simultaneously open the coolant path to the exchanger 70 while closing the coolant path to the bypass conduit 90.

From the foregoing, it will be observed that numerous variations and modifications may be effected without departing from the spirit and scope of the invention. It is to be understood that no limitation with respect to the specific apparatus illustrated herein is intended or should be inferred. It is, of course, intended to cover by the appended claims all such modifications as fall within the scope of the claims.

## Claims

1. A heating system for a chemical supply tank that holds a chemical used for exhaust gas treatment by injection of the chemical, comprising:
a supply tank for holding the chemical for injecting into an exhaust system;
a first heat exchanger configured to receive a fluid and arranged to transfer heat from the fluid into the chemical within the supply tank;
a second heat exchanger configured to receive the fluid and to transfer heat from the exhaust system into the fluid; and
a pump to move the fluid from the second heat exchanger to the first heat exchanger.

2. The heating system according to claim1, wherein the first heat exchanger comprises a tube coil within the supply tank.

3. The heating system according to claim 2, wherein the exhaust system comprises an exhaust conduit and the second heat exchanger comprises a tube coil within the exhaust conduit.

4. The heating system according to claim 1, wherein the chemical is composed of urea solution and the exhaust system includes a catalytic converter.

5. The heating system according to claim 1, wherein the fluid is composed of engine coolant.

6. The heating system according to claim 1, comprising a bypass conduit arranged to bypass the fluid around the first heat exchanger in a controllable fashion.

7. A system for injecting urea solution into an exhaust system of a diesel engine that powers a truck, comprising:
a diesel engine having a coolant circulation system that moves coolant into, through and out of the diesel engine, and an exhaust system for expelling exhaust generated by the diesel engine, the exhaust system having an exhaust conduit in flow communication with a catalytic converter;
a supply tank that holds urea solution;
a urea solution delivery system that moves urea solution from the supply tank to the exhaust and injects the urea solution into the exhaust system upstream of or into the catalytic converter;
a first heat exchanger and a second heat exchanger each configured to receive coolant;
the first heat exchanger configured to receive an amount of coolant exiting the second heat exchanger and arranged to transfer heat from the amount of coolant into the urea solution within the supply tank; and
the second heat exchanger configured to receive the amount of coolant and to transfer heat from the exhaust system into the amount of coolant.

8. The heating system according to claim 7, wherein the first heat exchanger comprises a first tube coil located within the supply tank and the second heat exchanger comprises a second tube coil located within the exhaust system.

9. The heating system according to claim 7, comprising a bypass conduit arranged to controllably bypass coolant around the first heat exchanger to control temperature of the urea solution within the supply tank.

10. A method of heating a chemical within a chemical supply tank, the chemical dispensed from the chemical supply tank to be injected into an exhaust system to treat exhaust gas, comprising the steps of:
transferring heat from exhaust gas to a fluid; and
transferring heat from the fluid to the chemical within the chemical supply tank.

11. The method according to claim 10, wherein the steps are further defined in that the fluid is a heat transfer fluid that is isolated from the chemical.

12. The method according to claim 11, wherein the steps are further defined in that the chemical is composed of urea solution.

13. The method according to claim 12, wherein the method is further defined in that the exhaust system and the chemical supply tank are on board a truck, wherein the exhaust system is part of the drive system for the truck.

14. A method for treating exhaust gases from a diesel engine on a truck comprising the steps of:
during operation of the diesel engine, circulating a coolant fluid through the diesel engine;
holding urea solution within a supply tank on the truck;
injecting urea solution into the exhaust system during operation of the diesel engine; and
heating the urea solution before injecting the urea solution into the exhaust system, wherein the urea solution is heated by transferring heat from the exhaust system downstream of the diesel engine to the urea solution via the coolant fluid.

15. The method according to claim 14, wherein the step of heating the urea solution is further defined in that coolant is circulated through an exhaust heat exchanger in heat transfer communication with the exhaust system and the coolant is then circulated through a urea heat exchanger in heat transfer communication with the urea solution within the supply tank.

16. The method according to claim 15, wherein the step of heating is undertaken to prevent the urea solution from having a temperature of less than 12 degrees F.

17. The method according to claim 15, wherein the step of heating is further **characterized in that** the flow of coolant is controlled to prevent excessive temperature of the urea solution within the supply tank.
